# DEMANDE DE BREVET EUROPEEN

(11) **EP 2 218 941 A1**
(43) Date de publication de la demande: **18.08.2010**
(21) Numéro de dépôt: 10153341.2
(22) Date de dépôt: 11.02.2010
(51) Int. Cl.: F16G 11/12

(54) **Dispositif tendeur rapide**

(30) Priorité: 12.02.2009 FR 0950886
(71) Demandeur: Pradeilles, Olivier, 30340 Mons (FR)
(72) Inventeur: Pradeilles, Olivier, 30340 Mons (FR)
(74) Mandataire: Domange, Maxime

(57) **Abrégé**

L'invention concerne un dispositif tendeur rapide destiné à la mise sous tension d'un câble **caractérisé en ce qu**'il comprend deux pièces, une cloche (1) et un corps (2) présentant globalement une symétrie de révolution emboîté dans la cloche (1) en laissant un espace de géométrie torique entre les deux pièces, la cloche (1) comprenant deux encoches (11a,11b) latérales de part et d'autre du corps (2), le corps (2) comprenant une fente (21) au niveau d'un de ces diamètres destinée à être alignée avec les encoches (11a,11b) de la cloche (1) afin qu'y soit introduit le câble (3) avant tension, le fond des encoches (11a,11b) et de la fente (21) se trouvant en outre au niveau de l'espace torique dès lors que le corps (2) est emboîté dans la cloche (1) afin que le câble (3) puisse se loger dans cet espace torique lors de l'actionnement du tendeur par mobilisation en rotation du corps (2) par rapport à la cloche (1) autour de son axe de révolution, une des deux pièces étant en outre munie d'au moins deux ergots (21a,21b) et l'autre pièce munie d'une succession d'empreintes (12) correspondant à ces ergots (21a,21b), de manière à constituer un cliquet anti-retour permettant la rotation du corps (2) dans la cloche (1) dans un sens unique.

## Description

### Arrière-plan de l'invention

La présente invention se rapporte au domaine général des dispositifs tendeurs rapides. Ces dispositifs servent pour le serrage de câbles.

Il existe de multiples types de tendeurs rapides, fonctionnant sur le principe d'une translation d'une partie du fil par rapport à une autre. L'actionnement en translation peut être généré par l'avancée d'un boulon attaché à une première partie du câble sur un pas de vis attaché à la seconde partie du câble.

Il existe également des tendeurs rapides utilisant un levier, permettant de faire avancer, par à-coup successifs, une partie du câble par rapport à l'autre.

Les tendeurs rapides actuellement connus sont généralement encombrants et relativement complexes à mettre en oeuvre.

Il existe également des dispositifs pour tendre des câbles du genre câble d'étendage à linge. Ces dispositifs de tensions, particulièrement simples, fonctionnent sur le principe d'un blocage du déplacement du câble dans le sens opposé à la tension en utilisant un ensemble de boucles qui bloque le mouvement du câble.

Il existe encore des systèmes de tendeurs ayant une forme de disque perforé à intervalles réguliers. Le disque est solidarisé avec le câble et enroulé généralement à l'aide d'une poignée. Une fois la tension souhaitée atteinte le disque est immobilisé à l'aide de cavaliers qui sont utilisés pour accrocher le câble. Ces dispositifs sont complexes de mise en oeuvre et nécessitent un outillage spécifique.

### Objet et résumé de l'invention

La présente invention a donc pour but de proposer un dispositif tendeur rapide ne présentant pas les inconvénients des dispositifs connus de l'art antérieur en proposant un dispositif tendeur destiné à la mise sous tension d'un câble, comprenant deux pièces, une cloche et un corps présentant globalement une symétrie de révolution emboîté dans la cloche en laissant un espace de géométrie torique entre les deux pièces, la cloche comprenant deux encoches latérales de part et d'autre du corps, le corps comprenant une fente au niveau d'un de ces diamètres destinée à être alignée avec les encoches de la cloche afin que soit introduit le câble avant tension, le fond des encoches et de la fente se trouvant en outre au niveau de l'espace torique dès lors que le corps est emboîté dans la cloche afin que le câble puisse se loger dans cet espace torique lors de l'actionnement du tendeur par mobilisation en rotation du corps par rapport à la cloche autour de son axe de révolution, une des deux pièces étant en outre munie d'au moins deux ergots et l'autre pièce munie d'une succession d'empreintes correspondant à ces ergots, de manière à constituer un cliquet anti-retour permettant la rotation du corps dans la cloche dans un sens unique.

Avec un tel tendeur, la rotation de la fente dans laquelle a été introduit le câble, entraîne en torsion le câble qui vient se loger dans l'espace torique ménagé entre la cloche et le corps. La tension est ensuite maintenue par la présence du cliquet anti-retour. L'existence de l'espace torique entre la cloche et le corps est une caractéristique essentielle et originale de l'invention. Elle permet non seulement de loger le câble mais également, en le logeant, de le coincer en l'empêchant de tout dégagement dès lors que la fente du corps n'est plus alignée avec les encoches de la cloche.

La présence de l'espace torique est essentielle. Les termes « espace torique » signifient que l'espace ménagé entre les deux pièces et dans lequel le câble vient se loger a géométriquement une forme de tore, c'est-à-dire la forme d'un tube courbé refermé sur lui-même. Selon l'invention, l'espace dans lequel vient se loger le câble quand la fente et les encoches ne sont plus alignées a donc la forme d'un tube courbé refermé sur lui-même. Ainsi, même lorsque le câble ne présente qu'une tension moyenne, le logement du câble dans l'espace torique empêche précisément celui-ci de se dégager en glissant vers le haut de la fente et des encoches dès lors que celles-ci ne sont plus alignées.

La combinaison de la présence de l'espace torique, de la fente et des encoches permet de bloquer le câble dans le dispositif en désalignant la fente avec les encoches après l'avoir placé très facilement dans celui-ci quand la fente et les encoches étaient encore alignées.

Selon une caractéristique préférentielle de l'invention, le corps supporte les ergots et la cloche supporte la succession d'empreintes.

Une telle réalisation permet notamment que la cloche présente une souplesse suffisante pour se déformer, de manière à laisser les ergots portés par le corps s'engrener dans la succession d'empreintes. En effet, pour assurer que les ergots bloquent bien le mouvement du corps par rapport à la cloche dans le sens opposé au sens permettant le serrage du câble, il est nécessaire que les ergots déforment la cloche pour pouvoir s'engrener dans les empreintes. La succession d'empreintes a tendance à diminuer la résistance à la déformation de la cloche.

Selon une caractéristique avantageuse, le corps comprend un prolongement axial dépassant de la cloche après emboîtement des pièces et permettant d'actionner en rotation le corps dans la cloche.

La présence d'un tel prolongement axial pour actionner la rotation du corps permet une utilisation facile de l'objet de l'invention.

En particulier, dans une réalisation très avantageuse, le prolongement axial du corps porte une forme à six pans standard.

Cette caractéristique permet d'assurer que l'on puisse utiliser un outil classique pour mettre en oeuvre l'objet de l'invention de manière très simple.

L'utilisation d'une forme six pans standard permet d'utiliser notamment un tournevis électrique muni d'un embout correspondant. Cela permettra de réaliser la tension du câble en quelques dixièmes de secondes, une fois le dispositif selon l'invention placé sur le câble.

Selon une caractéristique particulière, le prolongement axial comprend un trou taraudé sur l'axe de symétrie du corps.

La présence d'un tel trou taraudé permet de fixer un crochet ou une vis dans le prolongement axial. Le tendeur rapide peut alors assurer une deuxième fonction de suspente pour divers objets, par exemple des fleurs, une affiche, un panneau, un luminaire, etc... Ainsi, de multiples accessoires peuvent être adaptés sur le tendeur rapide selon l'invention.

Selon une caractéristique avantageuse, les encoches de la cloche et la fente sur le corps présentent des arêtes chanfreinées afin de préserver l'intégrité du câble et de ses propriétés mécaniques.

Cette caractéristique permet d'éviter que le câble vienne s'abîmer sur des arêtes franches des encoches et/ou de la fente lors de l'enroulement du corps dans la cloche et de la torsion du câble par déplacement de la fente du corps. Cela évite de créer des points de faiblesse sur le câble et empêche une rupture prématurée qui serait alors due à la tension du câble.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective éclatée du dispositif selon l'invention ;
- les figures 2A à 2C montrent respectivement une vue de dessus, une vue de dessous et une coupe d'un dispositif selon l'invention lors de son installation sur un câble avant actionnement ;
- les figures 3A à 3C montrent respectivement une vue de dessus, une vue de dessous et une coupe d'un dispositif selon l'invention lors de son actionnement sur un câble ;
- les figures 4A à 4C montrent respectivement une vue de dessus, une vue de dessous et une coupe d'un dispositif selon l'invention en fin de tension du câble ;
- la figure 5 représente en perspective un mode de réalisation préférentiel de la cloche d'un dispositif selon l'invention ;
- la figure 6 représente en perspective un dispositif réalisé selon le mode de réalisation préférentiel de l'invention.

### Description détaillée d'un mode de réalisation

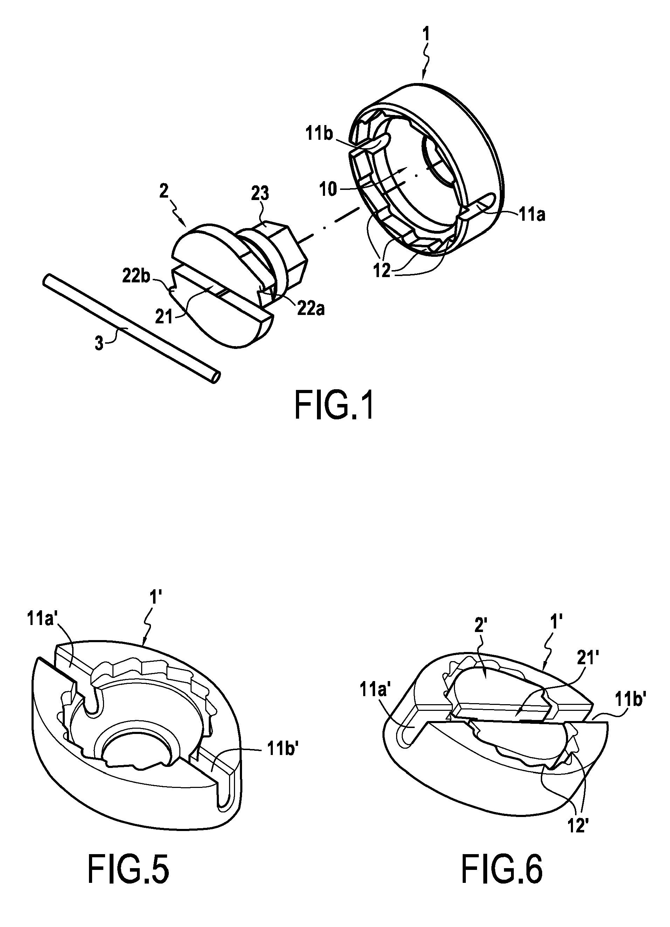

La figure 1 représente une vue en perspective éclatée du dispositif selon l'invention. Ce dispositif comprend une cloche 1 et un corps 2. Dans le mode de réalisation présenté sur la figure 1, les deux pièces 1 et 2 présentent globalement une symétrie de révolution. Une telle symétrie est nécessaire pour le corps 2. En revanche, concernant la cloche 1, il pourra être utile que celle-ci ne présente pas une telle symétrie.

La cloche 1 comprend un logement 10 destiné à accueillir le corps 2. Il est utile selon l'invention que le logement 10 de la cloche 1 dans lequel le corps 2 vient s'emboîter présente une symétrie de révolution.

Selon l'invention, ce logement 10 présente une forme telle que, lorsque le corps 2 est emboîté dans la cloche 1, un espace de géométrie torique existe entre les deux pièces. La forme du corps 2 est également réalisée de manière à assurer la présence de cet espace.

Par ailleurs, la cloche 1 comprend des encoches 11a et 11b et le corps 2 comprend quant à lui une fente 21 placée le long d'un diamètre du corps 2.

Le fond des encoches 11a et 11b ainsi que le fond de la fente 21 pratiqués dans le corps 2 sont tels qu'ils débouchent tous deux sur l'espace torique ménagé entre les pièces 1 et 2.

Le dispositif est conçu pour accueillir un câble 3 dans la fente 21 du corps et dans les encoches 11a et 11b de la cloche 1 qui sont, à ce moment là, alignées.

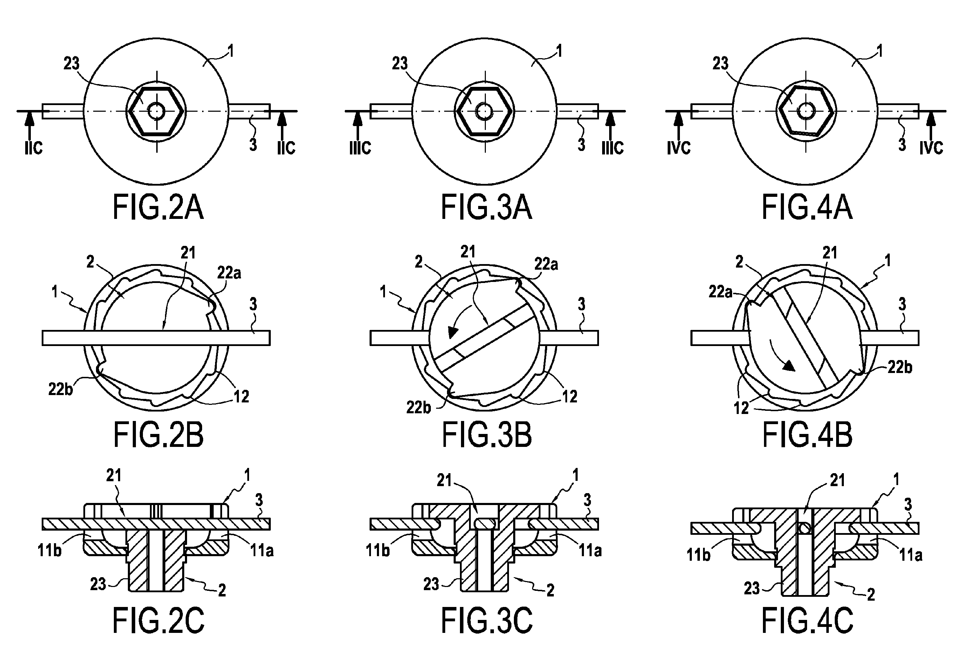

Cela est représenté sur la figure 2 où l'on voit une vue de dessus, une vue de dessous et une coupe du dispositif selon l'invention lors de son installation sur un câble 3. Sur la figure 2, on observe bien que la fente du corps 2 est alignée avec les encoches sur la cloche 1. Cela permet précisément l'insertion du dispositif sur le câble à tendre. Ce câble peut être, en l'occurrence, un câble de clôture, de pergola, d'étendage à linge, etc...

Sur les figures 2B et 2C, on voit le câble qui est engagé au fond des encoches 11a et 11b et au fond de la fente 21, de manière à venir traverser l'espace torique au niveau de cette fente 21 et de ces encoches 11a et 11b.

On voit sur la coupe AA que le trajet du câble 3 est totalement libre vers le haut au niveau de la fente 21 du corps 2 et également au niveau des encoches 11a et 11b qui, en l'occurrence, sur l'exemple de réalisation de la figure 2, sont plus profondes que la fente 21.

Une fois placé sur le câble 3, le tendeur rapide va créer un point d'enroulement à la façon décrite sur les figures 3 et 4. Cet enroulement implique que le câble 3 se loge dans l'espace torique où il est alors empêché de tout dégagement grâce à la forme en tube courbé refermé sur lui-même de l'espace entre la cloche 2 et le corps 1.

Pour permettre l'enroulement, le corps 1 comprend deux ergots 22a et 22b, symétriques de part et d'autre de l'axe de symétrie du corps 2. Ces ergots 22a et 22b sont adaptés pour s'insérer dans une succession d'empreintes, notées 12 de manière générique sur la cloche 1.

Le positionnement des ergots 22a et 22b dans les empreintes notées 12 est visible sur la figure 2B. On voit ici que les ergots 22a et 22b sont adaptés pour se placer dans les empreintes 12 et sont d'une taille suffisante pour complètement bloquer le mouvement qui s'oppose à l'appui des ergots 22a et 22b sur les empreintes 12 de la cloche 1.

Seul le mouvement dans le sens de la flèche représentée sur la figure 3A est possible à cause de la présence des ergots 22a, 22b et de la succession d'empreintes 12 complémentaires de ces ergots 22a, 22b.

Dans la réalisation présentée, les ergots et les empreintes participent à la constitution de l'espace torique. En effet, les ergots engagés dans les empreintes permettent de « fermer totalement » l'espace torique. Cela empêche radicalement tout dégagement du câble 3 et constitue donc une réalisation préférentielle.

On remarque néanmoins que, même si l'ensemble anti-retour ergots/empreintes était placé ailleurs sur le corps 2 et la cloche 1, et donc même si l'espace torique présentait une ouverture partielle vers l'extérieur, sa forme en tube courbé refermé sur lui-même et sa fonction de loger le câble 3 lors de l'enroulement permet que le câble 3 vienne s'y loger et y rester bloqué. On voit cela sur les figures 3B et 4B en particulier sur lesquelles le câble 3 ne peut plus se dégager puisqu'il passe sous la forme du corps 2 permettant de précisément définir l'espace torique.

On remarque d'ailleurs ici que, pour ménager un espace torique entre deux pièces dont une cloche 1, il est nécessaire que la pièce intérieure, ici dénommée le corps, vienne boucher au moins partiellement l'espace intérieur de la cloche 1 en formant l'espace torique en question.

Dans l'exemple de réalisation présenté, cette forme du corps 2 comprend ainsi une plateforme venant coiffer partiellement la surface intérieure de la cloche 1. Cette surface intérieure de la cloche 1 et la plateforme du corps 2 délimitent l'espace torique nécessaire à l'invention. Munir un corps 2 d'une plateforme montée au dessus d'un tronc tournant venant s'emboiter dans une cloche et y pratiquer une fente arrivant, dans le tronc, sous la plateforme à une profondeur supérieure ou égale au diamètre du câble attendu est donc une manière de former l'espace torique selon l'invention où vient se loger le câble entre le corps 2 et la cloche 1.

La rotation du corps 2 dans la cloche 1 se fait alors en force par entraînement du corps 2 par rapport à la cloche 1 dans le sens de la flèche représentée sur les figures 2A et 2B.

Cet entraînement est avantageusement généré par application d'une force en rotation sur la forme six pans standard d'un prolongement axial noté 23 du corps 2 traversant le fond du logement 10 de la cloche 1.

Ce prolongement axial permet d'appliquer, par exemple à l'aide d'un tournevis sur lequel est montée une forme complémentaire à la forme standard six pans du prolongement, une force permettant de mettre en rotation le corps 2 dans la cloche 1.

Cette rotation se faisant en force, il est nécessaire d'appliquer sur la forme six pans du prolongement axial 23 un effort suffisant pour déformer la cloche 1 au niveau de la succession d'empreintes 12 et laisser glisser les ergots 22a et 22b du corps 2 sur ces empreintes 12.

L'avancée des ergots 22a et 22b dans les empreintes 12 successives de la cloche 1 permet d'activer le système de cliquet anti-retour qui empêche le corps 2 de revenir à la position précédente. Le câble 3 s'enroule alors autour du corps 2 et se tend. Sur la figure 4, est représentée la position finale du tendeur une fois le câble 3 tendu.

Pour actionner le corps, il est bien sur également possible d'utiliser une clé plate adaptée à la forme six pans standard du prolongement axial du corps 2. Pendant la rotation en force du corps 2, il est bien sûr nécessaire de maintenir la cloche 1. Pour cela, cette cloche 1 pourra comprendre un élément d'immobilisation, en particulier la cloche 1 pourra être de forme carrée ou toute autre forme permettant d'appliquer un outil de manière à la maintenir en position.

On constate aussi, sur les figures 2C, 3C et 4C, que la présence de l'espace torique entre la cloche 1 et le corps 2 est indispensable pour permettre au câble 3 de se loger dans cet espace au moment où il est mis en tension par rotation du corps 2 dans la cloche 1.

On remarque enfin que diverses mises en oeuvre peuvent être réalisées selon les principes de l'invention. Notamment, la forme de la cloche 1 peut être toute forme qui permettrait d'appliquer un outil pour la maintenir en position lors de l'application du couple en rotation permettant de faire tourner le corps 2 par rapport à la cloche 1 entrainant le câble 3 en torsion et en tension.

Aussi, dans un mode de réalisation préférentiel, la présence du câble 3 engagée dans la fente du corps et dans les encoches permet de maintenir la cloche en position pour éviter qu'elle ne tourne.

La figure 5 représente une telle cloche 1' selon un mode de réalisation préférentiel de l'invention. Dans ce mode de réalisation, la cloche 1' est allongée en ovale le long de l'axe passant par les deux encoches 11a' et 11b'. Ces encoches 11a' et 11b' sont également allongées de manière prolonger la fente 21' du corps 2' lorsque celui-ci est introduit et emboité dans la cloche 1' ainsi que représenté sur la figure 6.

Les encoches 11a' et 11b' forment donc alors des canaux latéraux dans lesquels vient se loger le câble 3. L'appui du câble 3 sur les parois de ces canaux-encoches 11a' et 11b' sert alors d'outil de maintien de la cloche 1' en position et évite que la cloche 1' ne tourne en même temps que le corps 2' quand celui-ci est emmené en rotation par l'intermédiaire du prolongement axial.

Avantageusement, la déformation en ovale de la cloche 1' sera telle que la longueur de chaque canal latéral 11a' et 11b' est sensiblement de la longueur du demi-diamètre du corps 2'. Cela permet d'obtenir un appui cohérent de la cloche 1' sur le câble 3 par rapport à l'effort de déformation développé par le mouvement du corps 2' dans la cloche 1'. Néanmoins il pourra bien sur être envisagé, selon l'invention, de réaliser une cloche encore plus allongée au besoin.

On remarque que le corps 2' de la figure 6 est globalement inchangé par rapport à la réalisation des figures précédentes. Néanmoins, on note que dans le mode de réalisation présenté sur les figures 5 et 6, les pièces 1' et 2' présentent des chanfreins au niveau de la fente 21' et des encoches allongées 11a' et 11b'. Ces chanfreins protègent le câble 3 lors de son appui sur les arêtes des encoches et de la fente à la manière déjà évoquée.

En outre, le mode de réalisation présenté est tel que le corps porte les ergots et la cloche les empreintes. Néanmoins, l'invention concerne également un dispositif dans lequel les ergots seraient portés par la cloche et les empreintes par le corps. En outre, il est tout à fait envisagé que le nombre d'ergots soient augmenté. Il reste néanmoins préférable que les ergots soient implémentés par paire se faisant face de part et d'autre du corps en respectant la symétrie de cette pièce.

On remarque aussi que l'espace torique peut être constitué de diverses façons dès lors que sa forme est torique et qu'il réalise la fonction de loger le câble quand la fente et les encoches ne sont plus alignées. Ainsi des formes diverses de la cloche et du corps ménageant un espace torique entre eux et permettant que le câble vienne s'y loger, et donc d'y être bloqué dès que la fente et les encoches ne sont plus alignées, sont envisageables.

## Revendications

1. Dispositif tendeur rapide destiné à la mise sous tension d'un câble **caractérisé en ce qu'**il comprend deux pièces, une cloche (1) et un corps (2) présentant globalement une symétrie de révolution emboîté dans la cloche (1) en laissant un espace de géométrie torique entre les deux pièces, la cloche (1) comprenant deux encoches (11a, 11b) latérales de part et d'autre du corps (2), le corps (2) comprenant une fente (21) au niveau d'un de ces diamètres destinée à être alignée avec les encoches (11a, 11b) de la cloche (1) afin qu'y soit introduit le câble (3) avant tension, le fond des encoches (11a, 11b) et de la fente (21) se trouvant en outre au niveau de l'espace torique dès lors que le corps (2) est emboîté dans la cloche (1) afin que le câble (3) puisse se loger dans cet espace torique lors de l'actionnement du tendeur par mobilisation en rotation du corps (2) par rapport à la cloche (1) autour de son axe de révolution, une des deux pièces étant en outre munie d'au moins deux ergots (21a, 21b) et l'autre pièce munie d'une succession d'empreintes (12) correspondant à ces ergots (21a, 21b), de manière à constituer un cliquet anti-retour permettant la rotation du corps (2) dans la cloche (1) dans un sens unique.

2. Dispositif selon la revendication 1, **caractérisé en ce que** le corps (2) supporte les ergots (21a, 21b) et la cloche (1) supporte la succession d'empreintes (12).

3. Dispositif selon l'une des revendications 1 et 2, **caractérisé en ce que** le corps (2) comprend un prolongement axial (23) dépassant de la cloche (1) après emboîtement des pièces et permettant d'actionner en rotation le corps (2) dans la cloche (1).

4. Dispositif selon la revendication 3, **caractérisé en ce que** le prolongement axial (23) du corps (2) porte une forme à six pans standard.

5. Dispositif selon l'une des revendications 3 et 4, **caractérisé en ce que** le prolongement axial (23) comprend un trou taraudé sur l'axe de symétrie du corps (2).

6. Dispositif selon l'une des revendications précédentes, **caractérisé en ce que** les encoches (11a, 11b) de la cloche (1) et la fente (21) sur le corps (2) présentent des arêtes chanfreinées afin de préserver l'intégrité du câble (3) et de ses propriétés mécaniques.

7. Dispositif selon l'une des revendications précédentes, **caractérisé en ce que** la forme de la cloche (1) permet d'appliquer un outil pour la maintenir en position lors de l'application du couple en rotation permettant de faire tourner le corps (2) par rapport à la cloche (1) entrainant le câble (3) en torsion et en tension.

8. Dispositif selon l'une des revendications 1 à 6, **caractérisé en ce que** la cloche (1') est allongée en ovale le long de l'axe passant par les deux encoches (11a' et 11b'), ces encoches (11a' et 11b') étant également allongées de manière à former des canaux latéraux dans lesquels vient se loger le câble (3) qui sert alors d'outil de maintien de la cloche (1') en position et évite que la cloche (1') ne tourne en même temps que le corps (2') quand celui-ci est emmené en rotation par l'intermédiaire de son prolongement axial.

9. Dispositif selon la revendication 8, **caractérisé en ce que** la déformation en ovale de la cloche (1') est telle que la longueur de chaque canal-encoche latéral (11a' et 11b') est sensiblement de la longueur du demi-diamètre du corps (2').
